(19) Europäisches Patentamt
European Patent Office
Office européen des brevets

(11) **EP 4 086 851 A1**

(12) **EUROPEAN PATENT APPLICATION**

(43) Date of publication:
**09.11.2022 Bulletin 2022/45**

(21) Application number: **22169308.8**

(22) Date of filing: **21.04.2022**

(51) International Patent Classification (IPC):
**G06T 11/40** (2006.01)     **G06T 19/20** (2011.01)
**G06T 15/20** (2011.01)

(52) Cooperative Patent Classification (CPC):
**G06T 11/40; G06T 15/20; G06T 19/20;**
G06T 2200/04; G06T 2207/10004;
G06T 2207/10028; G06T 2207/20221;
G06T 2207/30244

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.04.2021 US 202163180281 P**
**23.02.2022 US 202217678121**

(71) Applicant: **Faro Technologies, Inc.**
**Lake Mary, FL 32746-6204 (US)**

(72) Inventors:
• **PARIAN, Jafar Amiri**
**8952 Schlieren (CH)**
• **KAABI, Hani**
**70825 Korntal-Münchingen (DE)**
• **BUBACK, Johannes**
**70825 Korntal-Münchingen (DE)**

(74) Representative: **Harris, Oliver John Richard**
**Novagraaf UK**
**Centrum**
**Norwich Research Park**
**Colney Lane**
**Norwich NR4 7UG (GB)**

(54) **OCCLUSION DETECTION FOR LASER SCAN-POINT COLORING**

(57)     A system includes a three-dimensional (3D) scanner that captures a 3D point cloud with multiple scan-points corresponding to one or more objects scanned in a surrounding environment. The system further includes a camera that captures an image of the surrounding environment. The system further includes one or more processors that colorize the scan-points in the 3D point cloud using the image. Colorizing a scan-point includes determining, for the scan-point, a corresponding pixel in the image by back-projecting the scan-point to the camera. Colorizing the scan-point includes assigning, to the scan-point, a color-value based on the corresponding pixel. Colorizing the scan-point includes computing, for the scan-point, a distance of the scan-point from the camera. Colorizing the scan-point includes determining, based on the distance, that the scan-point is occluded from only one of the camera and the 3D scanner, and in response, updating the color-value assigned to the scan-point.

FIG. 10

**Description**

CROSS REFERENCE TO RELATED APPLICATIONS

This application claims the benefit of U.S. Provisional Application Serial No. 63/180,281, filed April 27, 2021, the entire disclosure of which is incorporated herein by reference.

BACKGROUND

The subject matter disclosed herein relates to use of a 3D laser scanner coordinate measurement device, and particularly to determining a color of a scan-point captured by the 3D laser scanner, and particularly when the scan-point is occluded from a camera of the 3D laser scanner coordinate measurement device.

Typically, a 3D laser scanner, such as a time-of-flight (TOF) laser scanner, steers a beam of light to a non-cooperative target such as a diffusely scattering surface of an object. A distance meter in the device measures a distance to the object, and angular encoders measure the angles of rotation of two axles in the device. The measured distance and two angles enable a processor in the device to determine the 3D coordinates of the target. While a TOF laser scanner is generally used as an example 3D laser scanner when describing technical solutions herein, other types of laser scanners can also

A TOF laser scanner is a scanner in which the distance to a target point is determined based on the speed of light in air between the scanner and a target point. Laser scanners are typically used for scanning closed or open spaces such as interior areas of buildings, industrial installations and tunnels. They may be used, for example, in industrial applications and accident reconstruction applications. A laser scanner optically scans and measures objects in a volume around the scanner through the acquisition of data points representing object surfaces within the volume. Such data points are obtained by transmitting a beam of light onto the objects and collecting the reflected or scattered light to determine the distance, two-angles (i.e., an azimuth and a zenith angle), and optionally a gray-scale value. This raw scan data is collected, stored and sent to a processor or processors to generate a 3D image representing the scanned area or object.

Generating an image requires at least three values for each data point. These three values may include the distance and two angles, or may be transformed values, such as the x, y, z coordinates. In an embodiment, an image is also based on a fourth gray-scale value, which is a value related to irradiance of scattered light returning to the scanner.

Most TOF scanners direct the beam of light within the measurement volume by steering the light with a beam steering mechanism. The beam steering mechanism includes a first motor that steers the beam of light about a first axis by a first angle that is measured by a first angular encoder (or another angle transducer). The beam steering mechanism also includes a second motor that steers the beam of light about a second axis by a second angle that is measured by a second angular encoder (or another angle transducer).

Many contemporary laser scanners include a color camera mounted on the laser scanner for gathering camera digital images of the environment and for presenting the camera digital images to an operator of the laser scanner. By viewing the camera images, the operator of the scanner can determine the field of view of the measured volume and adjust settings on the laser scanner to measure over a larger or smaller region of space. In addition, the camera digital images may be transmitted to a processor to add color to the scanner image. To generate a color scanner image, at least three positional coordinates (such as x, y, z) and three color values (such as red, green, blue "RGB") are collected for each data point.

Some 3D scanners use high dynamic range (HDR) techniques with the color camera to provide enhanced color images that used with the scanner image to provide a more accurate color representation of the scanned environment. HDR techniques involve acquiring multiple images at each location with different exposure settings. These images are then combined to provide a resulting image that more accurately represents the environment. Another option for HDR, sometimes named interference mode, is to apply different exposure times to different parts of one captured image. This technique is useful in areas having high contrast (light and dark areas). While HDR images are certainly useful in enhancing the color of the scanner image, the acquiring of multiple images at different exposures can be time consuming. For example, to acquire images in a 360 spherical area about the 3D scanner may take more than 60 images. If each of these 60 images has multiple exposures, then the time to acquire all of the images may be lengthy.

Accordingly, while existing 3D scanners are suitable for their intended purposes, what is needed is a 3D scanner having certain features of embodiments of the present disclosure.

BRIEF DESCRIPTION

According to one or more embodiments, a system includes a three-dimensional (3D) scanner that captures a 3D point cloud that comprises a plurality of scan-points corresponding to one or more objects scanned in a surrounding environment. The system further includes a camera that captures an image of the surrounding environment. The system further includes one or more processors that colorize the scan-points in the 3D point cloud using the image. Colorizing a scan-point includes determining, for the scan-point, a corresponding pixel in the image by back-projecting the scan-point to the camera. Colorizing the scan-point includes assigning, to the scan-point, a color-value based on the corresponding pixel. Colorizing the scan-point includes computing, for the scan-point, a distance of the scan-point from the camera. Colorizing the scan-point includes determining, based on the distance, that the scan-point is occluded from only one of the camera and the 3D scanner, and in response, updating the color-value assigned to the scan-point.

According to one or more embodiments, the color-value is updated to a predetermined value. The predetermined value can be user-configurable.

According to one or more embodiments, the one or more processors are part of the 3D scanner.

According to one or more embodiments, determining that the scan-point is occluded from only one of the camera and the 3D scanner comprises comparing a depth of the scan-point determined by the 3D scanner, and the distance of the scan-point from the camera. The scan-point is occluded in response to a difference between the depth and the distance being greater than a predetermined threshold, in one or mor embodiments.

According to one or more embodiments, determining that the scan-point is occluded from only one of the camera and the 3D scanner is based on an angle between a normal of the scan-point and a back-projected ray from the scan-point to the camera.

According to one or more embodiments, the camera is an integral part of the 3D scanner.

According to one or more embodiments, the camera is mounted on the 3D scanner at a predetermined position relative to the 3D scanner.

According to one or more embodiments, a computer-implemented method includes capturing, by a three-dimensional (3D) scanner, a 3D point cloud that comprises a plurality of scan-points corresponding to one or more objects scanned in a surrounding environment. The method further includes capturing, by a camera, an image of the surrounding environment. The method further includes colorizing, by one or more processors, the scan-points in the 3D point cloud using the image. Colorizing a scan-point includes determining, for the scan-point, a corresponding pixel in the image by back-projecting the scan-point to the camera. Colorizing the scan-point includes assigning, to the scan-point, a color-value based on the corresponding pixel. Colorizing the scan-point includes computing, for the scan-point, a distance of the scan-point from the camera. Colorizing the scan-point includes determining, based on the distance, that the scan-point is occluded from only one of the camera and the 3D scanner, and in response, updating the color-value assigned to the scan-point.

According to one or more embodiments, a computer program product includes a memory device with computer executable instructions stored thereon, the computer executable instructions when executed by one or more processors cause the one or more processors to perform a method. The method includes receiving a 3D point cloud captured by a three-dimensional (3D) scanner, wherein the 3D point cloud comprises a plurality of scan-points corresponding to one or more objects scanned in a surrounding environment. The method further includes receiving an image of the surrounding environment captured by a camera. The method further includes colorizing, by one or more processors, the scan-points in the 3D point cloud using the image. Colorizing a scan-point includes determining, for the scan-point, a corresponding pixel in the image by back-projecting the scan-point to the camera. Colorizing the scan-point includes assigning, to the scan-point, a color-value based on the corresponding pixel. Colorizing the scan-point includes computing, for the scan-point, a distance of the scan-point from the camera. Colorizing the scan-point includes determining, based on the distance, that the scan-point is occluded from only one of the camera and the 3D scanner, and in response, updating the color-value assigned to the scan-point.

These and other advantages and features will become more apparent from the following description taken in conjunction with the drawings.

BRIEF DESCRIPTION OF THE DRAWINGS

The patent or application file contains at least one drawing executed in color. Copies of this patent or patent application publication with color drawing(s) will be provided by the Office upon request and payment of the necessary fee.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 is a perspective view of a laser scanner in accordance with an embodiment;

FIG. 2 is a side view of the laser scanner illustrating a method of measurement according to an embodiment;

FIG. 3 illustrates a schematic illustration of the laser scanner of FIG. 1 according to an embodiment;

FIG. 4 shows different types of occlusions;

FIG. 5 depicts a flowchart of a method for generating a point cloud using a measurement device according to one or more embodiments;

FIG. 6 depicts the projection types of ultrawide-angle (fisheye) lens and the path of light from a point in 3D space into the image plane;

FIG. 7 shows the relation of radius and zenith angle (and reverse) for all ultrawide angle (fisheye) lens types at FIG. 6 including also the perspective projection;

FIG. 8 depicts a table that provides the domains and ranges of various trigonometric functions;

FIG. 9 depicts a flowchart for colorizing a point cloud using occlusion detection according to one or more embodiments;

FIG. 10 depicts an example scenario of colorizing a point cloud according to one or more embodiments;

FIG. 11 visually depicts how occlusion type 1 is determined for a scan-point in an example scenario according to one or more embodiments;

FIG. 12 visually depicts the values used for detecting occlusion type 2 according to one or more embodiments;

FIG. 13 depicts results of colorizing scan-points detected in occlusion according to one or more embodiments; and

FIG. 14 shows occlusion type 3 in an example scenario.

The detailed description explains embodiments of the invention, together with advantages and features, by way of example with reference to the drawings.

DETAILED DESCRIPTION

Embodiments herein relate to a three-dimensional 3D measurement device having a 3D scanner and at least one camera to capture color images. The 3D scanner captures a point cloud representing a scene in a field-of-view (FOV) of the 3D scanner. The point cloud is a set of scan-points, each scan-point being captured from a surface in the scene. The scan-points have 3D coordinates representing their location in the scene. The 3D measurement device further includes a camera that acquires a 2D image of scene, for example, a color image using RGB, or any other coloring scheme. Embodiments of the technical solutions described herein facilitate determining a color for each scan-point based on the 2D image to the 3D coordinates. The result is an interactive 3D scan of the scene that includes the captured scan-points and color. Embodiments provide advantages in determining color of scan-points that may be occluded from the camera, where such colorizing of the captured scan-points is accurate, particularly in comparison to existing techniques.

In the existing techniques, scan-points are typically colorized based on a ray-vector between the scan-point and the camera and a color of the closest scan-point from the camera on that ray vector. Technical solutions described herein improve the accuracy of the colorizing by accounting for the different positions of the camera and the 3D scanner. Even if the camera and the 3D scanner can be integrated into a single apparatus, because the two are separate devices, the position of the camera and the 3D scanner are different. Accordingly, a scan-point that is visible to the camera may not be visible to the 3D scanner, and vice versa.

Based on the position of the 3D scanner, the position of the camera, and the scan-point itself, a type of occlusion category of the scan-point is determined. A color for the scan-point is determined based on the type of occlusion category.

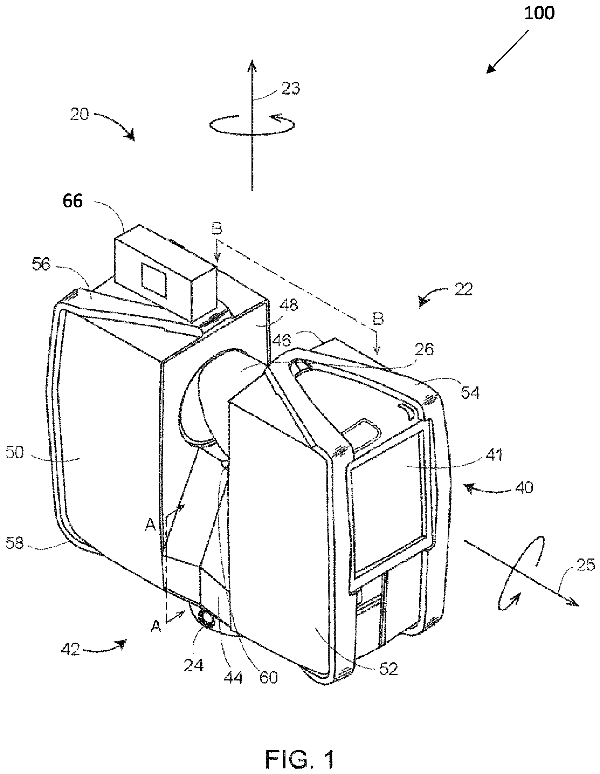

Referring now to FIGS. 1 - 2, a measurement device 100 includes a laser scanner 20 for optically scanning and measuring the environment surrounding the measurement device 100. The measurement device 100 further includes a camera 66 to capture color images of the surroundings.

The laser scanner 20 is an example 3D measurement device according to one or more embodiments of the technical solutions described herein. It should be noted that the 3D measurement device can be other types of devices than the laser scanner 20 of FIG. 1. The laser scanner 20 has a measuring head 22 and a base 24. The measuring head 22 is mounted on the base 24 such that the laser scanner 20 may be rotated about a vertical axis 23. In one embodiment, the measuring head 22 includes a gimbal point 27 that is a center of rotation about the vertical axis 23 and a horizontal axis 25. The measuring head 22 has a rotary mirror 26, which may be rotated about the horizontal axis 25.

The rotation about the vertical axis may be about the center of the base 24. The terms vertical axis and horizontal axis refer to the scanner in its normal upright position. It is possible to operate a 3D coordinate measurement device on its side or upside down, and so to avoid confusion, the terms "azimuth axis" and "zenith axis" may be substituted for the terms "vertical axis" and "horizontal axis," respectively. The term pan axis or standing axis may also be used as an alternative to vertical axis.

The measuring head 22 is further provided with an electromagnetic radiation emitter, such as light emitter 28, for example, that emits an emitted light beam 30. In one embodiment, the emitted light beam 30 is a coherent light beam such as a laser beam. The laser beam may have a wavelength range of approximately 300 to 1600 nanometers, for example 790 nanometers, 905 nanometers, 1550 nm, or less than 400 nanometers. It should be appreciated that other electromagnetic radiation beams having greater or smaller wavelengths may also be used. The emitted light beam 30 is amplitude or intensity modulated, for example, with a sinusoidal waveform or with a rectangular waveform. The emitted light beam 30 is emitted by the light emitter 28 onto a beam steering unit, such as mirror 26, where it is deflected to the environment. A reflected light beam 32 is reflected from the environment by an object 34. The reflected or scattered light is intercepted by the rotary mirror 26 and directed into a light receiver 36. The directions of the emitted light beam 30 and the reflected light beam 32 result from the angular positions of the rotary mirror 26 and the measuring head 22 about the axes 25 and 23, respectively. These angular positions in turn depend on the corresponding rotary drives or motors.

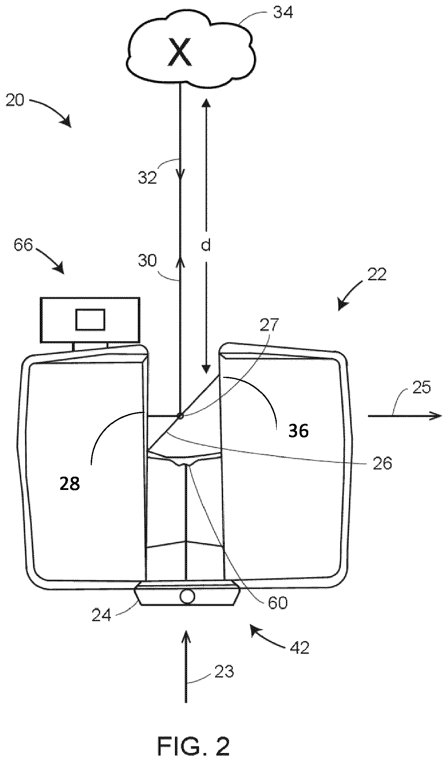

Coupled to the light emitter 28 and the light receiver 36 is a controller 38. The controller 38 determines, for a multitude of measuring points X (FIG. 2), a corresponding number of distances d between the laser scanner 20 and the points X on object 34. The distance to a particular point X is determined based at least in part on the speed of light in air through which electromagnetic radiation propagates from the device to the object point X. In one embodiment the phase shift of modulation in light emitted by the laser scanner 20 and the point X is determined and evaluated to obtain a measured distance d.

The speed of light in air depends on the properties of the air such as the air temperature, barometric pressure, relative humidity, and concentration of carbon dioxide. Such air properties influence the index of refraction $n$ of the air. The speed of light in air is equal to the speed of light in vacuum c divided by the index of refraction. In other words, $c_{air}$ = $c / n.$ A laser scanner of the type discussed herein is based on the time-of-flight (TOF) of the light in the air (the round-trip time for the light to travel from the device to the object and back to the device). Examples of TOF scanners include scanners that measure round trip time using the time interval between emitted and returning pulses (pulsed TOF scanners), scanners that modulate light sinusoidally and measure phase shift of the returning light (phase-based scanners), as well as many other types. A method of measuring distance based on the time-of-flight of light depends on the speed of light in air and is therefore easily distinguished from methods of measuring distance based on triangulation. Triangulation-based methods involve projecting light from a light source along a particular direction and then intercepting the light on a camera pixel along a particular direction. By knowing the distance between the camera and the projector and by matching a projected angle with a received angle, the method of triangulation enables the distance to the object to be determined based on one known length and two known angles of a triangle. The method of triangulation, therefore, does not directly depend on the speed of light in air.

In one mode of operation, the scanning of the volume around the laser scanner 20 takes place by rotating the rotary mirror 26 relatively quickly about axis 25 while rotating the measuring head 22 relatively slowly about axis 23, thereby moving the assembly in a spiral pattern. In an exemplary embodiment, the rotary mirror rotates at a maximum speed of 5820 revolutions per minute. For such a scan, the gimbal point 27 defines the origin of the local stationary reference system. The base 24 rests in this local stationary reference system.

In addition to measuring a distance d from the gimbal point 27 to an object point X, the scanner 20 may also collect gray-scale information related to the received intensity (equivalent to the term "brightness" or "optical power") value. The gray-scale value may be determined at least in part, for example, by integration of the bandpass-filtered and amplified signal in the light receiver 36 over a measuring period attributed to the object point X. As will be discussed in more detail herein, the intensity value may be used to enhance color images that are used to colorize the scanned data.

The measuring head 22 may include a display device 40 integrated into the laser scanner 20. The display device 40 may include a graphical touch screen 41, as shown in FIG. 1, which allows the operator to set the parameters or initiate the operation of the laser scanner 20. For example, the screen 41 may have a user interface that allows the operator to provide measurement instructions to the device, and the screen may also display measurement results.

The laser scanner 20 includes a carrying structure 42 that provides a frame for the measuring head 22 and a platform for attaching the components of the laser scanner 20. In one embodiment, the carrying structure 42 is made from a metal such as aluminum. The carrying structure 42 includes a traverse member 44 having a pair of walls 46, 48 on opposing ends. The walls 46, 48 are parallel to each other and extend in a direction opposite the base 24. Shells 50, 52 are coupled to the walls 46, 48 and cover the components of the laser scanner 20. In the exemplary embodiment, the shells 50, 52 are made from a plastic material, such as polycarbonate or polyethylene for example. The shells 50, 52 cooperate with the walls 46, 48 to form a housing for the laser scanner 20.

On an end of the shells 50, 52 opposite the walls 46, 48 a pair of yokes 54, 56 are arranged to partially cover the respective shells 50, 52. In the exemplary embodiment, the yokes 54, 56 are made from a suitably durable material, such as aluminum for example, that assists in protecting the shells 50, 52 during transport and operation. The yokes 54, 56 each includes a first arm portion 58 that is coupled, such as with a fastener for example, to the traverse 44 adjacent the base 24. The arm portion 58 for each yoke 54, 56 extends from the traverse 44 obliquely to an outer corner of the respective shell 50, 52. From the outer corner of the shell, the yokes 54, 56 extend along the side edge of the shell to an opposite outer corner of the shell. Each yoke 54, 56 further includes a second arm portion that extends obliquely to the walls 46, 48. It should be appreciated that the yokes 54, 56 may be coupled to the traverse 42, the walls 46, 48 and the shells 50, 54 at multiple locations.

The pair of yokes 54, 56 cooperate to circumscribe a convex space within which the two shells 50, 52 are arranged. In the exemplary embodiment, the yokes 54, 56 cooperate to cover all of the outer edges of the shells 50, 54, while the top and bottom arm portions project over at least a portion of the top and bottom edges of the shells 50, 52. This provides advantages in protecting the shells 50, 52 and the measuring head 22 from damage during transportation and operation. In other embodiments, the yokes 54, 56 may include additional features, such as handles to facilitate the carrying of the laser scanner 20 or attachment points for accessories for example.

On top of the traverse 44, a prism 60 is provided. The prism extends parallel to the walls 46, 48. In the exemplary embodiment, the prism 60 is integrally formed as part of the carrying structure 42. In other embodiments, the prism 60 is a separate component that is coupled to the traverse 44. When the mirror 26 rotates, during each rotation the mirror 26 directs the emitted light beam 30 onto the traverse 44 and the prism 60. Due to non-linearities in the electronic components, for example in the light receiver 36, the measured distances d may depend on signal strength, which may be measured in optical power entering the scanner or optical power entering optical detectors within the light receiver 36, for example. In an embodiment, a distance correction is stored in the scanner as a function (possibly a nonlinear function) of distance to a measured point and optical power (generally unscaled quantity of light power sometimes referred to as "brightness") returned from the measured point and sent to an optical detector in the light receiver 36. Since the prism 60 is at a known distance from the gimbal point 27, the measured optical power level of light reflected by the prism 60 may be used to correct distance measurements for other measured points, thereby allowing for compensation to correct for the effects of environmental variables such as temperature. In the exemplary embodiment, the resulting correction of distance is performed by the controller 38.

In an embodiment, the base 24 is coupled to a swivel assembly (not shown) such as that described in commonly owned U.S. Patent No. 8,705,012 ('012), which is incorporated by reference herein. The swivel assembly is housed within the carrying structure 42 and includes a motor 138 that is configured to rotate the measuring head 22 about the axis 23. In an embodiment, the angular/rotational position of the measuring head 22 about the axis 23 is measured by angular encoder 134.

An auxiliary image acquisition device 66 may be a device that captures and measures a parameter associated with the scanned area or the scanned object and provides a signal representing the measured quantities over an image acquisition area. The auxiliary image acquisition device 66 may be, but is not limited to, a pyrometer, a thermal imager, an ionizing radiation detector, or a millimeter-wave detector. In an embodiment, the auxiliary image acquisition device 66 is a color camera. The color camera can be equipped with a rectilinear lens, an ultrawide-angle lens, sometimes referred to as a "fisheye camera," or any other such lens to capture the color information of the one or more surfaces in the volume captured by the laser scanner 20.

In an embodiment, the camera 66 is rotated by a motor 138 and the angular/rotational position of the camera 66 can be measured by angular encoder 132. The camera 66 obtains 2D images of the scanned area to capture color data to add to the captured point cloud. In the case of a built-in color camera having an optical axis coincident with that of the 3D scanning device, the direction of the camera view may be easily obtained by simply adjusting the steering mechanisms of the scanner - for example, by adjusting the azimuth angle about the axis 23 and by steering the camera 66 about the axis 25.

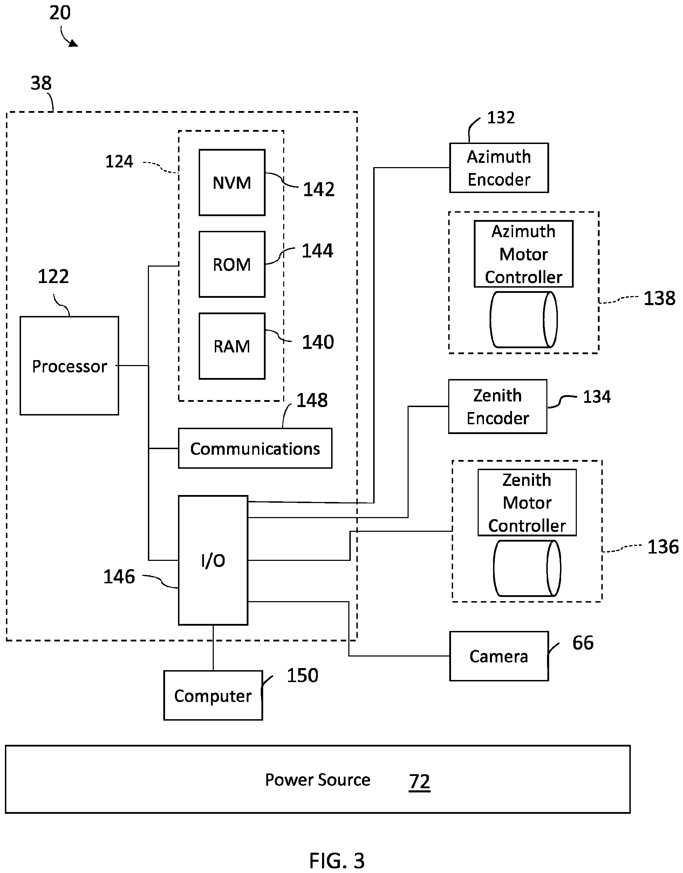

Referring now to FIG. 3 with continuing reference to FIGS. 1-2, elements are shown of the measurement device 100. Controller 38 is a suitable electronic device capable of accepting data and instructions, executing the instructions to process the data, and presenting the results. The controller 38 includes one or more processing elements 122. The processors may be microprocessors, field programmable gate arrays (FPGAs), digital signal processors (DSPs), and generally any device capable of performing computing functions. The one or more processors 122 have access to memory 124 for storing information.

Controller 38 can convert the analog voltage or current level provided by light receiver 36 into a digital signal to determine a distance from the laser scanner 20 to an object in the environment. Controller 38 uses the digital signals that act as input to various processes for controlling the laser scanner 20. The digital signals represent one or more laser scanner 20 data including but not limited to distance to an object, images of the environment, images acquired by the camera 66, angular/rotational measurements by a first or azimuth encoder 132, and angular/rotational measurements by a second axis or zenith encoder 134.

In general, controller 38 accepts data from encoders 132, 134, light receiver 36, light source 28, and camera 66 and is given certain instructions for the purpose of generating a 3D point cloud of a scanned environment. Controller 38 provides operating signals to the light source 28, light receiver 36, camera 66, zenith motor 136, and azimuth motor 138. The controller 38 compares the operational parameters to predetermined variances and if the predetermined variance is exceeded, generates a signal that alerts an operator to a condition. The data received by the controller 38 may be displayed on a user interface 40 coupled to controller 38. The user interface 40 may be one or more LEDs (light-emitting diodes) 82, an LCD (liquid-crystal diode) display, a CRT (cathode ray tube) display, a touchscreen display or the like. A keypad may also be coupled to the user interface for providing data input to controller 38. In one embodiment, the user interface is arranged or executed on a mobile computing device that is coupled for communication, such as via a wired or wireless communications medium (e.g. Ethernet, serial, USB, Bluetooth™ or WiFi) for example, to the laser scanner 20.

The controller 38 may also be coupled to external computer networks such as a local area network (LAN) and the Internet. A LAN interconnects one or more remote computers, which are configured to communicate with controller 38 using a well- known computer communications protocol such as TCP/IP (Transmission Control Protocol/Internet Protocol), RS-232, ModBus, and the like. Additional systems 20 may also be connected to LAN with the controllers 38 in each of these systems 20 being configured to send and receive data to and from remote computers and other systems 20. The LAN may be connected to the Internet. This connection allows controller 38 to communicate with one or more remote computers connected to the Internet.

The processors 122 are coupled to memory 124. The memory 124 may include random access memory (RAM) device 140, a non-volatile memory (NVM) device 142, and a read-only memory (ROM) device 144. In addition, the processors 122 may be connected to one or more input/output (I/O) controllers 146 and a communications circuit 148. In an embodiment, the communications circuit 92 provides an interface that allows wireless or wired communication with one or more external devices or networks, such as the LAN discussed above.

Controller 38 includes operation control methods described herein, which can be embodied in application code. For example, these methods are embodied in computer instructions written to be executed by processors 122, typically in the form of software. The software can be encoded in any language, including, but not limited to, assembly language, VHDL (Verilog Hardware Description Language), VHSIC HDL (Very High Speed IC Hardware Description Language), Fortran (formula translation), C, C++, C#, Objective-C, Visual C++, Java, ALGOL (algorithmic language), BASIC (beginners all-purpose symbolic instruction code), visual BASIC, ActiveX, HTML (Hypertext Markup Language), Python, Ruby and any combination or derivative of at least one of the foregoing.

In some embodiments, the controller 38 provides the data captured by the measurement device 100, i.e., the point cloud(s) and captured image(s) to a computer 150. The controller 38 communicates with the computer via a wired or wireless network. The computer 150 processes the data that is captured by the measurement device 100, as described herein.

In one or more embodiments, as depicted in FIGS. 1-2, the image acquisition device 66 is coupled to the laser scanner 20. Alternatively, the image acquisition device 66 is part of an assembly, for example, on a stand (e.g., tripod), a movable cart which can be moved manually, semi-autonomously, or autonomously.

In a measurement device includes a single device, such as the camera 66 by itself, or the laser scanner 20 by itself, "occlusions" are the regions on the object surface (34), which are not seen by that device. If the measurement device 20 includes two (or more) devices (for example, FIG. 1, laser scanner 20 and external camera 66), the "occlusion" is a region in each measurement, which is seen by one device, but not seen (measured or observed) by the other device. In other words, in measurement devices that include two devices, the occluded regions are the regions which are only measured by one device from the measurement device. For example, in the case of the measurement device 100, the camera 66 sees a region, but the laser scanner 20 does not, or vice versa.

As noted earlier, such occlusions in measurement devices 100 including two or more devices, poses technical challenges. For example, to colorize the point cloud from the laser scanner 20 with the images from the camera 66, a region (scan-points in the point cloud) can be colorized only if that region is seen by the camera 66 also. If this is not the case, inaccurate colorization of the scan-points in the region can result. Technical solutions described herein address such inaccuracies in colorization. Technical solutions described herein facilitate detecting the occluded regions and avoid assigning a color to such occluded regions, to avoid a wrong color being used. Further, technical solutions described herein facilitate, based on the occlusion detection, to colorize the point cloud reliably.

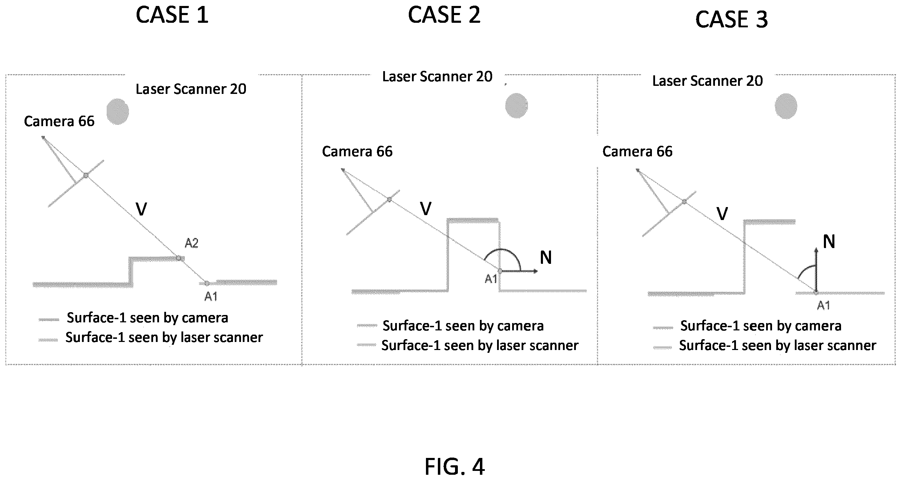

In systems such as the measurement device 100, that includes two devices, three different occlusion types can be identified. FIG. 4 shows different types in which point A1 is an occluded point, which is measured by the laser scanner 20, but it is not seen by the camera 66.

Case 1 shows occlusion type 1. If along the back-projection vector V of point A1, there is a surface which is measured by the laser scanner 20 and is seen by the camera 66, then point A1 can be marked as occluded point. Here, "back-projection vector" V is a vector which is defined by two pints: object point in 3D space and the projection center of the camera 66. The origin of the back-projection vector V is the object point (i.e., A1 in this case). This condition means that: there is a point A2 on the surface of an object (34), which lies on the back-projection vector V, A2 is closer to the camera 66 (camera projection center) compared to A1, and that A2 is measured by the laser scanner 20 as well as being seen in the image from the camera 66.

Case 2 shows occlusion type 2. If the normal vector N of point A1 has an angle larger than 90° with the back-projection vector V, then it means that A1 cannot be visible from the view of the camera 66. Therefore, A1 is marked as an occluded point.

Case 3 shows occlusion type 3. In this case the normal vector N of the point A1 has an angle smaller than 90° with the back-projection vector V, which means that theoretically A1 can be visible from the view of the camera 66. Furthermore, the surface which is occluding A1 is not measured by the laser scanner 20. There is not enough information in the available data to detect this type of occlusion, therefore, it is not marked as occluded point. In some embodiments, a color is assigned to A1 in this case, by performing additional measurements.

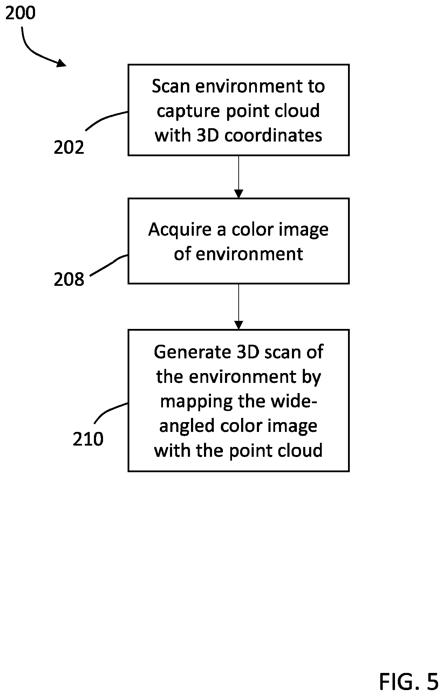

Referring now to FIG. 5, an embodiment of a method 200 is shown for generating a scan of the environment with the scanner 20. The method 200 begins in block 202 where the environment in which the scanner 20 is positioned is scanned. As described herein, the volume (e.g. the scan area) around the laser scanner 20 is performed by rotating the rotary mirror 26 relatively quickly about axis 25 while rotating the measuring head 22 relatively slowly about axis 23, thereby moving the assembly in a spiral pattern. Thus, for each light beam emitted, a distance value and the angles of the mirror 26 and the measurement head 22 is determined. Thus, a 3D coordinate of a scan-point in the environment may be determined for each emitted and received light beam. Further, for each light beam, an intensity value of the returned light beam is measured.

The light beams are emitted and received as the measurement head 22 is rotated 180 degrees about the axis 23. The method 200 further includes, at block 208, acquiring color images of the environment. In an embodiment, a 2D color image is acquired by the auxiliary image acquisition device 66. In an embodiment, one or more 2D images are acquired using an ultrawide-angle lens to capture color data in the spherical volume surrounding the laser scanner 20. In an embodiment, 2D acquired color images are in an RGB color model. In other embodiments, other color models, e.g., cyan, magenta, and yellow (CMY), or cyan, magenta, yellow, and black (CMYK), or any other color model can be used. In yet other embodiments, where an ultrawide-angle lens is not used, much more 2D images are acquired to capture the color data in the spherical volume surrounding the laser scanner 20.

Once the color data is acquired, the method 200 includes, at block 210, generating a colorized 3D scan by mapping the 2D coordinates in the image(s) captured by the camera 66 with the 3D coordinates in the point cloud captured by the scanner 20. The mapping can be performed using any known techniques. An example mapping a 2D ultrawide-angle image with the 3D point cloud is described herein.

It should be appreciated that the method 200 provides advantages in generating enhanced color 3D scans over techniques that use HDR (High Dynamic Range) imaging techniques because of requiring fewer number of images to be captured by using an ultrawide-angle field of view.

Physical agents living in complex environments, such as humans and animals, need two types of visual sensing abilities. One is to focus on objects with a precise but small retina and the other is to look around the environment with a wide but coarse retina. Both visual sensing mechanisms are required to enable robust and flexible visual behaviors. In particular, the wide visual information obtained by looking around is necessary to monitor wide areas and to avoid dangerous situations. If the complete surrounding in space can be involved into the perception process, orientation and navigation in space becomes easier and more reliable.

Typically, a camera's field of view is smaller than the human field of view, which limits objects from being captured in a single picture. This technical challenge is addressed by using a ultrawide-angle, i.e., hemispherical or fisheye lens, which creates a wide field of view image. With a ultrawide-angle lens an image of more than 180° angular field of view can be acquired. Due to the large field of view, it has been used in many applications with different domains such as forestry, the study of plant canopies, geodesy to produce a site obstruction diagram for future GPS missions, etc.

Technical challenges of using such a ultrawide-angle lens include lateral color, high order distortion (edge compression), loss of resolution and severe drop-off of illumination at the full field (e.g., 180°), which limit applications of the ultrawide-angle lenses for precise photogrammetric applications.

Embodiments of the technical solutions described herein address such technical challenges and facilitate using the ultrawide-angle lens to acquire 2D color images and mapping such images to the 3D coordinates in the point cloud. Further, technical effects and benefits of some embodiments include providing a 3D scanner system that rapidly acquires 3D coordinates of a collection of points in a scan area with accurate color information using the single ultrawide-angle 2D color image. In one or more embodiments, the auxiliary image acquisition device 66 can be an omnidirectional camera such as a RICOH® THETA® camera for example. The camera 66 can capture a 360° view of the environment by capturing two images substantially concurrently. The two images may be captured by two ultrawide-angle lenses that are positioned to be facing in opposite directions, each camera capturing a respective field of at least 180°. In some cases, the two images that are captured can have overlapping portions that can be combined/edited, either automatically or manually. It is understood that above description provides some examples of the ultrawide-angle lens, and auxiliary image acquisition device 66 that can be used in one or more embodiments, and that in other embodiments, different lenses and/or cameras can be used.

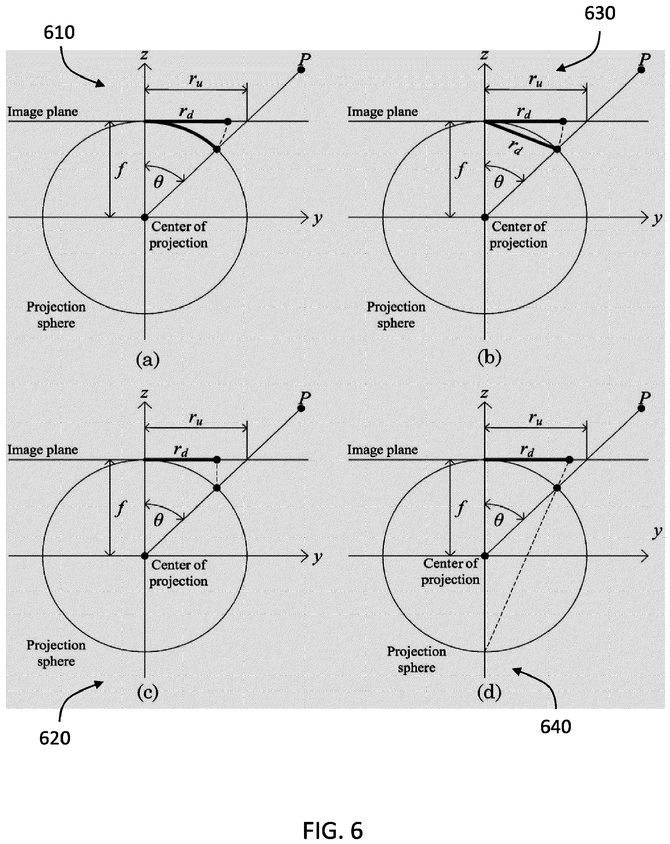

FIG. 6 depicts determining coordinates corresponding to pixels representing objects/surfaces captured by an ultrawide-angle image according to one or more embodiments. A difference between an ultrawide-angle lens and a typical rectilinear lens is that the projection from a 3D point to a 2D image in the ultrawide-angle lens is intrinsically non-perspective. Depending on the amount of deviation of the ray, equations below, and FIG. 6 provide four different types of projections which characterize ultrawide-angle lenses:

$$\text{Equidistant projection (610):} \quad r_d = c.\theta$$

$$\text{Orthographic projection (620):} \quad r_d = c.sin(\theta)$$

$$\text{Equisolid-angle projection (630):} \quad r_d = 2c.sin(\frac{\theta}{2})$$

$$\text{Stereographic projection (640):} \quad r_d = 2c.tan(\frac{\theta}{2})$$

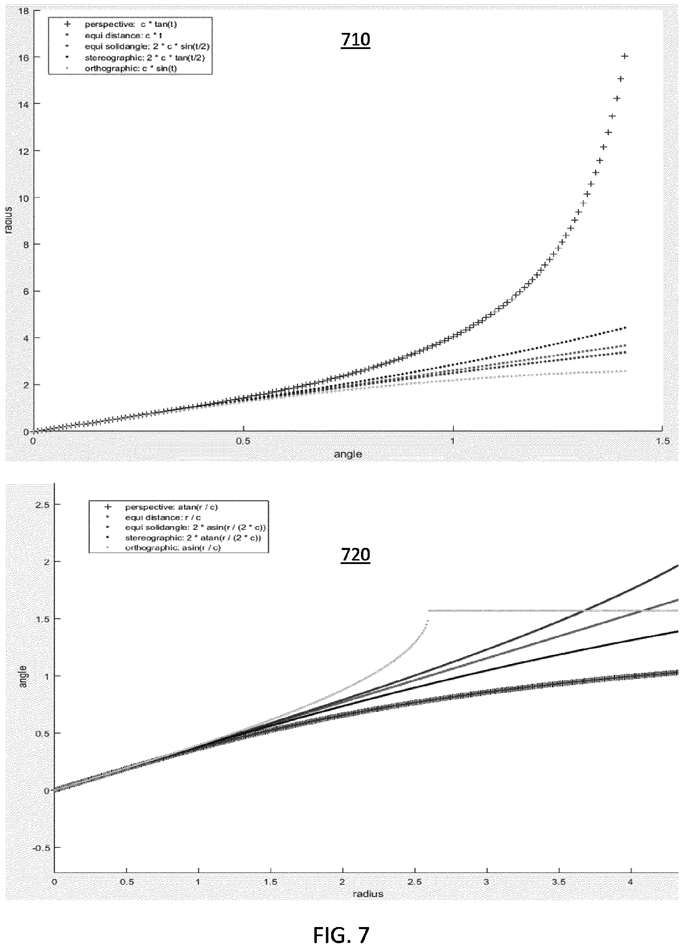

Here, $\theta$ is the zenith angle, c is a camera constant (in millimeter or pixels), and $r_d$ is the radius of the image point P (from the principal point). FIG. 7 shows the relation of radius and zenith angle (and reverse) for perspective projection and the four ultrawide-angle lens projection types 610, 620, 630, 640. The plot 710 shows that a lens with perspective projection requires an infinite image plane to projection near (and less) than 180° field of view. The plot 720 shows that orthographic projection type cannot handle field of view near (and more) than 180°. Typically, lenses available are designed to produce an equidistant projection. For example, NIKON® 8-mm f/2.8, CANON® 7.5-mm f/5.6, SIGMA® 15-mm f/2.8 (180° FOV), NIKON® 6-mm (220° FOV), and RICOH® THETA® ultrawide-angle lens 2.6-mm (~204° FOV) are examples of equidistant projection ultrawide-angle lenses.

Collinearity equations represent a set of two equations, used in photogrammetry and remote sensing to relate coordinates in a sensor plane (in two dimensions) to object coordinates (in three dimensions). Equation (1) represents collinearity equations for a 2D ultrawide-angle lens as used in one or more embodiments:

$$\left.\begin{array}{l} x = -\frac{c}{m}.\frac{U_X}{U_Z} \\ y = -\frac{c}{m}.\frac{U_Y}{U_Z} \end{array}\right\} (1)$$

Here, (x, y) is the image point coordinates in the photo coordinate system (e.g., millimeter or pixels), *c* is the camera constant, *m* is a ultrawide-angle lens coefficient factor (unit free). The ($U_X$, $U_Y$, and $U_Z$) are intermediate values that can be computed as follows:

$$\begin{pmatrix} U_X \\ U_Y \\ U_Z \end{pmatrix} = R^t. \begin{pmatrix} X - X_0 \\ Y - Y_0 \\ Z - Z_0 \end{pmatrix}$$

Here, ($X_0$, $Y_0$, $Z_0$) is the position of the center of projection (see FIG. 6), and (X, Y, Z) is the resulting object point coordinates in 3D space, and $R = R_X R_Y R_Z$, in which:

$$R_X = \begin{pmatrix} 1 & 0 & 0 \\ 0 & \cos(\omega) & -\sin(\omega) \\ 0 & \sin(\omega) & \cos(\omega) \end{pmatrix}, \ R_Y = \begin{pmatrix} \cos(\varphi) & 0 & \sin(\varphi) \\ 0 & 1 & 0 \\ -\sin(\varphi) & 0 & \cos(\varphi) \end{pmatrix}, \text{ } ?$$

$$R_Z = \begin{pmatrix} \cos(\kappa) & -\sin(\kappa) & 1 \\ \sin(\kappa) & \cos(k) & 1 \\ 0 & 0 & 1 \end{pmatrix}$$

and $R_Z =$ , where $(\omega, \varphi, \kappa)$ are the three rotation angles around the X, Y, and Z axes respectively. The point at coordinates (X, Y, Z) in the 3D point cloud is mapped and colorized with the pixel at (x, y) from the 2D ultrawide-angle image because of the above calculations.

Only the equidistant projection (610), and the equisolid-angle projection (630) types can properly model the Ricoh Theta ultrawide-angle lens. Accordingly, examples described herein provide equations that are applicable for those two projection models, however, it is understood that other types of projection models can be used without significant changes to the description provided herein. For example, the following are the calculations for the lens coefficient, $m$, for the equidistant and the equisolid-angle projection types for the ultrawide-angle lens:

$$\text{Equidistant projection coefficient: } m = -\frac{\tan(\theta)}{\theta}$$

$$\text{Equisolid-angle coefficient: } m = -\frac{\tan(\theta)}{2.\sin(\frac{\theta}{2})}$$

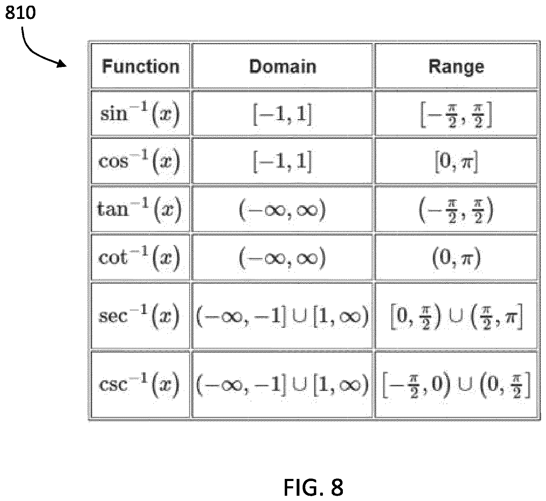

It should be noted that in the case of the ultrawide-angle lens of the auxiliary image acquisition device 66, the range of $\theta$ is [0, $\pi$]. Among the trigonometric functions, only the inverse of cosine or the inverse of cotangent return the angle in the range of [0, $\pi$] (for inverse of cotangent is (0, $\pi$)). Accordingly, one or more embodiments use the inverse of cosine (acos) to determine the angle theta. Inverse of sine or inverse of tangent do not have this property. If they are used in the formulation, they cannot determine the sign and the value of $\theta$ for incoming rays with $\theta$ near to $\pi/2$ or larger than $\pi/2$ (FOV of near to $\pi$ or larger than $\pi$). FIG. 8 depicts a table 810 that provides the domains and ranges of various trigonometric functions. Based on these, the above described calculations of the camera coefficient $m$ are based on using the following computation for the angle $\theta$.

$$\theta = cos^{-1}\left(-\frac{U_Z}{\sqrt{U_X^2 + U_Y^2}}\right)$$

The above described calculation resolves the ambiguity of mapping the 3D point cloud captured by the laser scanner 20 to pixels from the 2D ultrawide-angle color image from the auxiliary image acquisition device 66 at near to or larger than zenith angle of 90°. By using the above techniques for calculating the angle $\theta$ embodiments described herein eliminate disambiguation of the sign and value of the angle $\theta$. Therefore, the coefficient $m$ and the further calculations that use $m$ are calculated correctly

Typically, during mapping an image to a point cloud, straight lines in the real world (i.e., point cloud) are mapped to straight lines in the image generated by the rectilinear camera. However, most real optical systems introduce some undesirable effects, rendering the assumption of the rectilinear camera model inaccurate. In the case of the auxiliary image acquisition device 66, a radial distortion (also referred to as "radial barrel distortion") causes points on the image plane to be shifted from their ideal position along a radial axis from the principal point in the ultrawide-angle image plane. The visual effect of this displacement in ultrawide-angle optics is that the image has a higher resolution in the foveal areas, with the resolution decreasing nonlinearly toward the peripheral areas of the image.

Typically, the following set of equations **Error! Reference source not found.** are used to determine correction terms to image point coordinates. The equations use additional parameters for modeling the systemic errors of frame array cameras with rectilinear lenses.

$$\left. \begin{array}{l} \Delta x = dx_0 - \frac{\bar{x}}{c}dc - S_x\bar{x} + a\bar{y} + \bar{x}(r^2k_1 + r^4k_2 + r^6k_3) + (r^2 + 2\bar{x})p_1 + 2\overline{xy}p_2 \\ \Delta y = dy_0 - \frac{\bar{y}}{c}dc + a\bar{x} + \bar{y}(r^2k_1 + r^4k_2 + r^6k_3) + 2\overline{xy}p_1 + (r^2 + 2\bar{y})p_2 \end{array} \right\} (2)$$

Here, *dc* is a correction to camera constant *c*, $(dx_0, dy_0)$ represents corrections to the shift of principal point $(x_0, y_0)$, $(S_x, a)$ are affine transformation parameters: scale difference and shear, $k_1, k_2, k_3$ are parameters of radial lens distortion, and $p_1, p_2$ are parameters of decentering lens distortion.

It is known, that in modern electronic sensor manufacturing, the terms $(S_x, a)$ are negligible therefore, equations (2) consists of 8 camera calibration parameters which are determined through the process of camera self-calibration, which can be performed using known techniques.

It should be noted that the above description is one possible mapping the point cloud with a 2D image that is captured using an ultrawide angle lens camera, however, any other mapping can be used without limiting aspects of the occlusion detection related technical solutions described herein. Additionally, while a 2D color image in the above example maps an ultrawide-angle image, rectilinear images can also be used for the mapping in other embodiments.

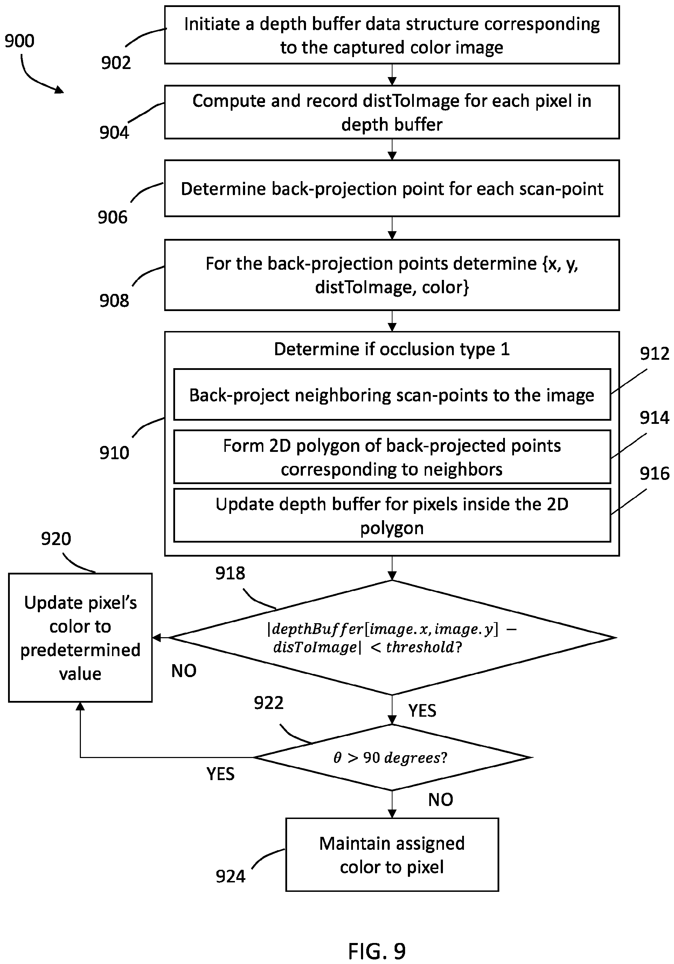

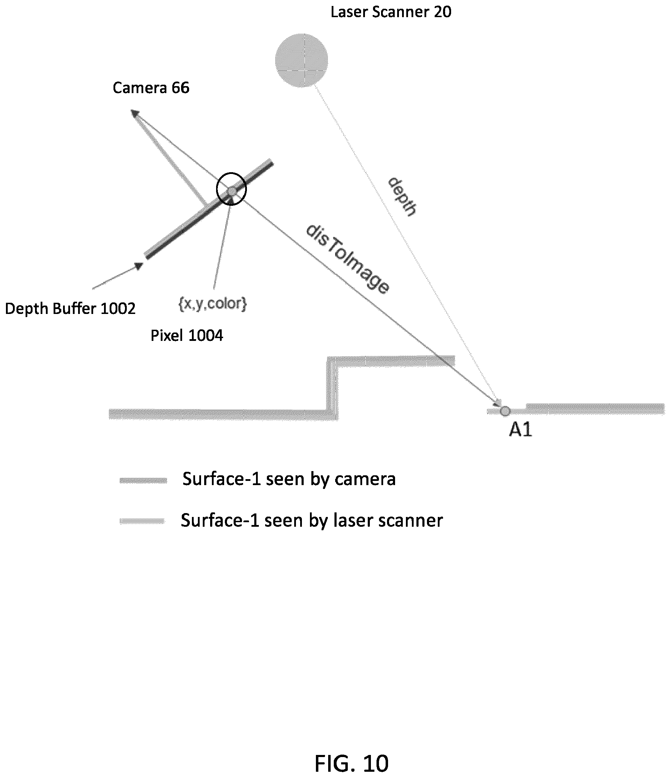

FIG. 9 depicts a flowchart of a method for colorizing a scan-point based on occlusion detection according to one or more embodiments. FIG. 10 depicts an example scenario of colorizing a point cloud, and that scenario is used when describing method 900 herein. It is understood that the method 900 can be used in other point cloud colorizing scenarios as well, and that FIG. 10 is just an illustration.

The method 900 starts before, during or after a point cloud and a corresponding color image are captured by the laser scanner 20 and the camera 66, respectively. At block 902, a 2D array data structure (e.g., of single or double-precision floating point values), which is called "depthBuffer," 1002 is constructed. The data structure depthBuffer 1002 has the same dimension as the captured image. Each pixel 1004 in the depthBuffer 1002 is initialized with "+infinity" (e.g., very large number) that is a predetermined value indicative of an "unknown depth." At block 904, the depthBuffer 1002 is filled with the depth for each pixel 1004, where the depth is the distance between object point A1 and the camera 66. Further, FIG. 10 depicts distance of view ray for the pixel 1004 ("disToImage" in FIG. 10), which is a distance between the scan-point A1 and the camera 66.

Further, at block 906, for each point A1 in the point cloud, the corresponding pixel 1004 is determined by back-projecting the point A1 onto the depthBuffer 1002. For example, in FIG. 10, A1 corresponds to point (x, y) in the depthBuffer 1002 (and color image, which is of the same dimensions). At block 908, the pixel 1004, which is the back-projected point for A1, is associated with the information {image.x, image.y, disToImage, color}. Here, color is determined by bilinear resampling of {image.x, image.y} coordinates from the color image from the camera 66.

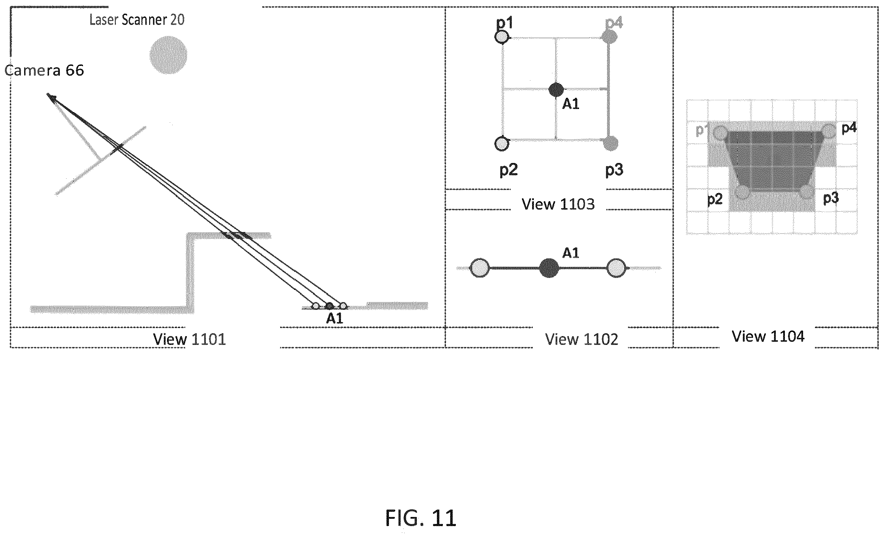

Further, at block 910, it is determined whether A1 is subject to occlusion type 1. FIG. 11 visually depicts how occlusion type 1 is determined for A1. To determine occlusion type 1, a predetermined number of neighbors of A1 are back projected to the color image, at 912. In the example scenario of FIG. 11, view 1101 depicts the scan-point A1 which is being colorized, view 1102 depicts 1.5D representation of A1 and its two neighboring points, view 1103 depicts 2.5D representation of the neighboring grid points, and view 1104 depicts the back projected points corresponding to A1 and its four neighbors in image space and a 2D polygon region constructed from them.

For example, in FIG. 11, four neighbor points of A1 (p1, p2, p3 and p4) are back-projected to the image (see views 1103, 1104). At 914, a 2D polygon is formed using the back-projected coordinates of p1, p2, p3, and p4. The values of depthBuffer 1002 for all pixels 1004 inside this polygon (view 1104) are updated at 916 as:

$$depthBuffer[pixel\ in\ polygon] =$$

$$\min\left(disToImage, depthBuffer[pixel\ in\ polygon]\right).$$

At 918, the color assigned to the pixel 1004 is evaluated by checking for the pixel 1004, if |*depthBuffer*[*image.x, image. y*] - *disToImage*| < *threshold.* Here, threshold is a predetermined value. In some embodiments, the threshold is set to *disToImage/h,* in which *h* is a predetermined value larger than 1 for example, 10 or 100. If the above condition is not satisfied, the scan point A1 is deemed to be in occlusion type 1, and the color of pixel 1004 is changed to a predetermined value (e.g., black), at 920. In one or more embodiments, the predetermined color value is user configurable.

If the condition is satisfied, the scan-point A1 is deemed to not be in occlusion type 1. In this case, at block 922, it is determined if A1 is in occlusion type 2. The scan-point A1 is considered as an occlusion type 2, if $\theta > 90°$ with θ defined as follows:

$$\theta = \cos^{-1}\left(\frac{dot(\vec{v}, \vec{n})}{\|\vec{v}\|\|\vec{n}\|}\right)$$

$\vec{v}$   is the reverse of view ray, which is a vector from point A1 to the projection center of the camera
$\vec{n}$   is the normal vector to the object surface at point A1

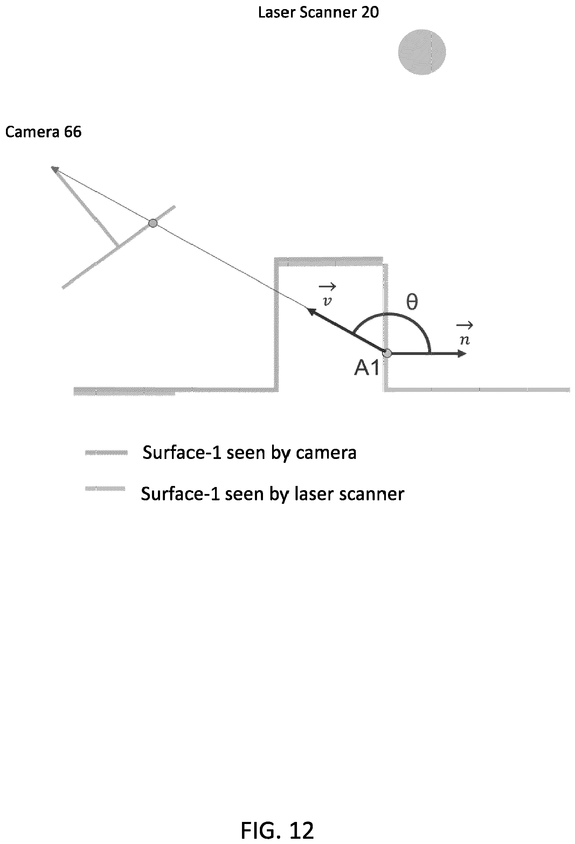

FIG. 12 visually depicts the values used for detecting occlusion type 2 according to one or more embodiments. The normal vector $\vec{n}$ can be computed by techniques such as, plane fitting to neighboring points of point A1. At least 3 nonlinear points should be contributed in plane fitting. Alternatively, or in addition, the normal vector is extracted from the estimated plane parameters.

If $\theta > 90°$, point A1 is occluded, and in this case the color of pixel 1004 is changed to a predetermined value (e.g., black), at 920. In one or more embodiments, the predetermined color value is user configurable.

Alternatively, if A1 is not occlusion type 2, the color value that is determined and assigned, for example, using bilinear resampling, is maintained, at 924.

The method 900 facilitates a technical solution to implement occlusion type 1 detection when constructing the object surface from the point cloud. The method 900 improves the colorization of the scan-points in occlusion type 1 in the point cloud by considering the neighborhood scan points around each particular scan-point.

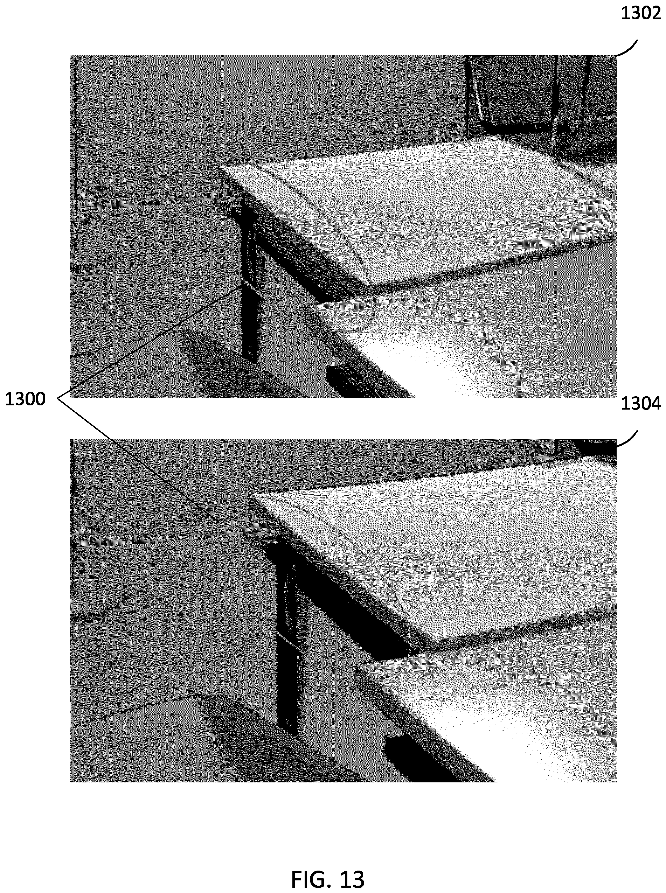

FIG. 13 depicts results of colorizing scan-points detected in occlusion according to one or more embodiments. View 1302 depicts the case where the scan-points are colorized using existing techniques. Particularly region 1300 shows various scan-points that have distorted color because of occlusion, type 1 or type 2. The distortion in the color is caused because the points are assigned colors occluding parts of the scene. Such inaccurate colorization is avoided using the technical solutions described herein. View 1304 depicts the same scene colorized using the technical solutions described herein. It is understood that the results shown in FIG. 13 are exemplary.

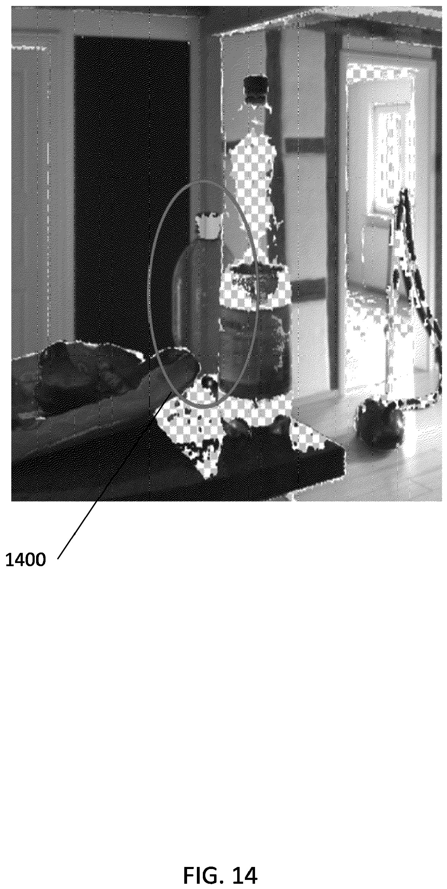

FIG. 14 shows type 3 occlusion that is not detectable using a single point cloud and color image(s) captured form a single position of the measurement device 100. Using color data and scan point captured by the measurement device 100 results in incorrectly colored points as depicted in region 1400. In some embodiments, multiple scans or multi-view image captures are performed from respective positions to minimize such occlusions, thus improving the colorization of the captured scene further.

Embodiments described herein can be used within the process of coloring a point cloud that is captured by the scanner 20, at least in the following modes: static scanning, and dynamic scanning (e.g., FARO® SWIFT®).

It should be appreciated that while embodiments herein describe the reduction of the image point residuals with reference to the use of the camera with the ultrawide-angle lens and a three-dimensional scanner, this is for example purposes and the claims should not be so limited. In other embodiments, the residual reduction could be used in other applications that use an omnidirectional camera, or a camera with a single ultrawide-angle lens to improve the accuracy of the image.

Terms such as processor, controller, computer, DSP, FPGA are understood in this document to mean a computing device that may be located within an instrument, distributed in multiple elements throughout an instrument, or placed external to an instrument.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description but is only limited by the scope of the appended claims.

Also provided are the following technology aspects:

1. A computer-implemented method comprising:

capturing, by a three-dimensional (3D) scanner, a 3D point cloud that comprises a plurality of scan-points corresponding to one or more objects scanned in a surrounding environment;

capturing, by a camera, an image of the surrounding environment; and

colorizing, by one or more processors, the scan-points in the 3D point cloud using the image, wherein colorizing a scan-point comprises:

determining, for the scan-point, a corresponding pixel in the image by back-projecting the scan-point to the camera;

assigning, to the scan-point, a color-value based on the corresponding pixel;

computing, for the scan-point, a distance of the scan-point from the camera; and

determining, based on the distance, that the scan-point is occluded from only one of the camera and the 3D scanner, and in response, updating the color-value assigned to the scan-point,

wherein determining that the scan-point is occluded from only one of the camera and the 3D scanner is based on an angle between a normal of the scan-point and a back-projected ray from the scan-point to the camera.

2. A computer program product comprising a memory device with computer executable instructions stored thereon, the computer executable instructions when executed by one or more processors cause the one or more processors to perform a method comprising:

receiving a 3D point cloud captured by a three-dimensional (3D) scanner, wherein the 3D point cloud comprises a plurality of scan-points corresponding to one or more objects scanned in a surrounding environment;

receiving an image of the surrounding environment captured by a camera; and

colorizing the scan-points in the 3D point cloud using the image, wherein colorizing a scan-point comprises:

determining, for the scan-point, a corresponding pixel in the image by back-projecting the scan-point to the camera;

assigning, to the scan-point, a color-value based on the corresponding pixel;

computing, for the scan-point, a distance of the scan-point from the camera; and

determining, based on the distance, that the scan-point is occluded from only one of the camera and the 3D scanner, and in response, updating the color-value assigned to the scan-point.

3. The computer program product of aspect 2, wherein determining that the scan-point is occluded from only one of the camera and the 3D scanner comprises comparing a depth of the scan-point determine by the 3D scanner, and the distance of the scan-point from the camera.

4. The computer program product of aspect 3, wherein the scan-point is occluded in response to a difference between the depth and the distance being greater than a predetermined threshold.

5. The computer program product of aspect 2, wherein determining that the scan-point is occluded from only one of the camera and the 3D scanner is based on an angle between a normal of the scan-point and a back-projected ray from the scan-point to the camera.

**Claims**

1. A system comprising:

a three-dimensional (3D) scanner that captures a 3D point cloud that comprises a plurality of scan-points corresponding to one or more objects scanned in a surrounding environment;
a camera that captures an image of the surrounding environment; and
one or more processors that colorize the scan-points in the 3D point cloud using the image, wherein colorizing a scan-point comprises:

determining, for the scan-point, a corresponding pixel in the image by back-projecting the scan-point to the camera;
assigning, to the scan-point, a color-value based on the corresponding pixel;
computing, for the scan-point, a distance of the scan-point from the camera; and
determining, based on the distance, that the scan-point is occluded from only one of the camera and the 3D scanner, and in response, updating the color-value assigned to the scan-point.

2. The system of claim 1, wherein the color-value is updated to a predetermined value.

3. The system of claim 2, wherein the predetermined value is user-configurable.

4. The system of claim 1, wherein the one or more processors are part of the 3D scanner.

5. The system of claim 1, wherein determining that the scan-point is occluded from only one of the camera and the 3D scanner comprises comparing a depth of the scan-point determined by the 3D scanner, and the distance of the scan-point from the camera.

6. The system of claim 5, wherein the scan-point is occluded in response to a difference between the depth and the distance being greater than a predetermined threshold.

7. The system of claim 1, wherein determining that the scan-point is occluded from only one of the camera and the 3D scanner is based on an angle between a normal of the scan-point and a back-projected ray from the scan-point to the camera.

8. The system of claim 1, wherein the camera is an integral part of the 3D scanner.

9. The system of claim 1, wherein the camera is mounted on the 3D scanner at a predetermined position relative to the 3D scanner.

10. A computer-implemented method comprising:

    capturing, by a three-dimensional (3D) scanner, a 3D point cloud that comprises a plurality of scan-points corresponding to one or more objects scanned in a surrounding environment;
    capturing, by a camera, an image of the surrounding environment; and
    colorizing, by one or more processors, the scan-points in the 3D point cloud using the image, wherein colorizing a scan-point comprises:

    determining, for the scan-point, a corresponding pixel in the image by back-projecting the scan-point to the camera;
    assigning, to the scan-point, a color-value based on the corresponding pixel;
    computing, for the scan-point, a distance of the scan-point from the camera; and
    determining, based on the distance, that the scan-point is occluded from only one of the camera and the 3D scanner, and in response, updating the color-value assigned to the scan-point.

11. The computer-implemented method of claim 10, wherein the color-value is updated to a predetermined value.

12. The computer-implemented method of claim 11, wherein the predetermined value is user-configurable.

13. The computer-implemented method of claim 10, wherein the one or more processors are part of the 3D scanner.

14. The computer-implemented method of claim 10, wherein determining that the scan-point is occluded from only one of the camera and the 3D scanner comprises comparing a depth of the scan-point determine by the 3D scanner, and the distance of the scan-point from the camera.

15. The computer-implemented method of claim 14, wherein the scan-point is occluded in response to a difference between the depth and the distance being greater than a predetermined threshold.

FIG. 1

FIG. 2

20

38

124

122
Processor

NVM — 142

ROM — 144

RAM — 140

148

Communications

146

I/O

132
Azimuth Encoder

Azimuth Motor Controller

138

Zenith Encoder — 134

Zenith Motor Controller

136

Camera — 66

150
Computer

Power Source    72

FIG. 3

CASE 1

Laser Scanner 20

Camera 66

V

A2

A1

----- Surface-1 seen by camera
===== Surface-1 seen by laser scanner

CASE 2

Laser Scanner 20

Camera 66

V

N

A1

----- Surface-1 seen by camera
===== Surface-1 seen by laser scanner

CASE 3

Laser Scanner 20

Camera 66

V

N

A1

----- Surface-1 seen by camera
===== Surface-1 seen by laser scanner

FIG. 4

200

Scan environment to
capture point cloud
with 3D coordinates

202

Acquire a color image
of environment

208

Generate 3D scan of
the environment by
mapping the wide-
angled color image
with the point cloud

210

FIG. 5

FIG. 6

FIG. 7

810

| Function | Domain | Range |
|---|---|---|
| $\sin^{-1}(x)$ | $[-1,1]$ | $\left[-\frac{\pi}{2}, \frac{\pi}{2}\right]$ |
| $\cos^{-1}(x)$ | $[-1,1]$ | $[0,\pi]$ |
| $\tan^{-1}(x)$ | $(-\infty,\infty)$ | $\left(-\frac{\pi}{2}, \frac{\pi}{2}\right)$ |
| $\cot^{-1}(x)$ | $(-\infty,\infty)$ | $(0,\pi)$ |
| $\sec^{-1}(x)$ | $(-\infty,-1] \cup [1,\infty)$ | $\left[0, \frac{\pi}{2}\right) \cup \left(\frac{\pi}{2},\pi\right]$ |
| $\csc^{-1}(x)$ | $(-\infty,-1] \cup [1,\infty)$ | $\left[-\frac{\pi}{2}, 0\right) \cup \left(0, \frac{\pi}{2}\right]$ |

FIG. 8

FIG. 9

Laser Scanner 20

Camera 66

depth

disToImage

Depth Buffer 1002

{x,y,color}

Pixel 1004

A1

Surface-1 seen by camera

Surface-1 seen by laser scanner

FIG. 10

EP 4 086 851 A1

Laser Scanner 20

Camera 66

A1

View 1101

p1
p4
A1
p2
p3

View 1103

A1

View 1102

p1
p4
p2
p3

View 1104

FIG. 11

Laser Scanner 20

Camera 66

$$\vec{v} \qquad \theta$$

$$\vec{n}$$

A1

────── Surface-1 seen by camera

········· Surface-1 seen by laser scanner

# FIG. 12

1302

1300

1304

FIG. 13

1400

FIG. 14

Europäisches
Patentamt
European
Patent Office
Office européen
des brevets

# EUROPEAN SEARCH REPORT

Application Number

EP 22 16 9308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/262737 A1 (MONNIER FABRICE [FR] ET AL) 13 September 2018 (2018-09-13) * abstract * * paragraphs [0001] – [0007], [0031] – [0036] * * paragraphs [0056] – [0061], [0064] * * paragraphs [0072] – [0076] * * figures 1-4 * | 1-15 | INV. G06T11/40 G06T19/20 G06T15/20 |
| A | US 2021/042997 A1 (VECHERSKY PAVEL [AU] ET AL) 11 February 2021 (2021-02-11) * abstract * * paragraphs [0001] – [0008], [0022] – [0027] * * paragraphs [0094] – [0101], [0131] – [0157] * | 1-15 | |
| A | US 2020/005438 A1 (TOPCON CORP [JP]) 2 January 2020 (2020-01-02) * abstract * * paragraphs [0028] – [0030] * | 1-15 | TECHNICAL FIELDS SEARCHED (IPC) |
| A | US 2018/014002 A1 (FARO TECH INC [US]) 11 January 2018 (2018-01-11) * abstract * | 1-15 | G06T |
| A | WO 2015/048053 A1 (FARO TECH INC [US]) 2 April 2015 (2015-04-02) * abstract * | 1-15 | |

The present search report has been drawn up for all claims

| Place of search | Date of completion of the search | Examiner |
|---|---|---|
| Munich | 30 September 2022 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 9308

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2022

| Patent document cited in search report | | Publication date | Patent family member(s) | | Publication date |
|---|---|---|---|---|---|
| US 2018262737 | A1 | 13-09-2018 | EP | 3373251 A1 | 12-09-2018 |
| | | | US | 2018262737 A1 | 13-09-2018 |
| US 2021042997 | A1 | 11-02-2021 | AU | 2019262089 A1 | 09-07-2020 |
| | | | AU | 2020267215 A1 | 10-12-2020 |
| | | | CA | 3098630 A1 | 07-11-2019 |
| | | | CN | 112384891 A | 19-02-2021 |
| | | | EP | 3788469 A1 | 10-03-2021 |
| | | | JP | 2021522607 A | 30-08-2021 |
| | | | KR | 20210005621 A | 14-01-2021 |
| | | | US | 2021042997 A1 | 11-02-2021 |
| | | | US | 2022139033 A1 | 05-05-2022 |
| | | | WO | 2019210360 A1 | 07-11-2019 |
| US 2020005438 | A1 | 02-01-2020 | EP | 3588446 A2 | 01-01-2020 |
| | | | US | 2020005438 A1 | 02-01-2020 |
| US 2018014002 | A1 | 11-01-2018 | DE | 102013017500 B3 | 02-04-2015 |
| | | | US | 2015109419 A1 | 23-04-2015 |
| | | | US | 2018014002 A1 | 11-01-2018 |
| | | | WO | 2015058017 A1 | 23-04-2015 |
| WO 2015048053 | A1 | 02-04-2015 | DE | 102013110583 B3 | 08-01-2015 |
| | | | GB | 2533753 A | 29-06-2016 |
| | | | JP | 2016537613 A | 01-12-2016 |
| | | | WO | 2015048053 A1 | 02-04-2015 |

EPO FORM P0459

For more details about this annex : see Official Journal of the European Patent Office, No. 12/82

**EP 4 086 851 A1**

## REFERENCES CITED IN THE DESCRIPTION

**Patent documents cited in the description**

- US 63180281

- US 8705012 B